# EUROPÄISCHE PATENTANMELDUNG

(11) **EP 2 991 035 A1**
(43) Veröffentlichungstag der Anmeldung: **02.03.2016**
(21) Anmeldenummer: 15174213.7
(22) Anmeldetag: 29.06.2015
(51) Int. Cl.: G06T 7/00

(54) **VERFAHREN UND VORRICHTUNG ZUR DARSTELLUNG VON PATHOLOGISCHEN VERÄNDERUNGEN IN EINEM UNTERSUCHUNGSOBJEKT BASIEREND AUF 3D-DATENSÄTZEN**

(30) Priorität: 10.07.2014 DE 102014213409
(71) Anmelder: Siemens Aktiengesellschaft, 80333 München (DE); Centre Hospitalier Universitaire Vaudois, 1011 Lausanne (CH)
(72) Erfinder: Grandy, Martin, 91054 Erlangen (DE); Hagmann, Patric, 1066 Epalinges (CH); Huwer, Stefan, 91056 Erlangen (DE); Krüger, Gunnar, Watertown-Boston, MA, 02472 (US); Maeder, Philippe, 1005 Lausanne (CH); Maréchal, Bénédicte, 1003 Lausanne (CH); Meuli, Reto, 1005 Lausanne (CH)

(57) **Zusammenfassung**

Die Erfindung betrifft ein Verfahren und eine Vorrichtung zur Analyse von pathologischen Veränderungen anatomischer Areale in Untersuchungsobjekten. Dabei umfasst das Verfahren die Segmentierung von 3D Daten des anatomischen Areals, deren Normalisierung, Vergleich mit einem Referenzmodell (31) und Zuordnen eines Abweichungswertes (32) und Intensitätswertes aus einer Intensitätsskala (33) zu dem anatomischen Areal. Der Intensitätswert der bildlichen Darstellung des normalisierten anatomischen Areals ermöglicht es dem Fachmann, schnell und kostengünstig pathologische Veränderungen an dem anatomischen Areal festzustellen.

## Beschreibung

Die vorliegende Erfindung betrifft ein Verfahren zur Analyse eines 3D Datensatzes eines Untersuchungsobjekts, das es erlaubt, pathologische Veränderungen anatomischer Areale von Untersuchungsobjekten zu erkennen, ohne dabei volumetrische Teilbereiche des anatomischen Areals separat oder im Detail zu analysieren.

Es existieren verschiedene Methoden für die medizinische Diagnostik pathologisch veränderter Gewebestrukturen in Untersuchungsobjekten, beispielsweise in anatomischen Arealen des Gehirns. Eine mögliche Darstellung der Veränderungen betrifft einen tabellarischen Report für jede Struktur, wobei dieser in Abschnitte segmentiert wird und Einträge markiert werden, die außerhalb des Referenzbereichs liegen.

Eine weitere Darstellung pathologisch veränderter Gewebestrukturen betrifft das Ausdrucken eines Referenzdatensatzes und eines normalisierten Datensatzes des Patienten, wobei beide Datensätze basierend auf den einzelnen Bildpunkten miteinander verglichen werden.

Diese bekannten Verfahren haben die nachteilige Eigenschaft, Volumeneffekte in Teilbereichen der anatomischen Areale zu generieren und dadurch pathologische Veränderungen zu verdecken. Darüber hinaus erfordert die Analyse und Interpretation der Resultate erheblichen Zeitaufwand, da eine große Anzahl von Teilbereichen des untersuchten anatomischen Areals untereinander verglichen werden müssen.

Die bisher bekannten Verfahren zur Untersuchung pathologischer Veränderungen von anatomischen Arealen erfordern in der Mehrzahl der Fälle die Untersuchung von deren Teilbereichen. Die sich dadurch ergebende Komplexität der Untersuchung und der hohe Zeitaufwand wird daher oft als nachteilig empfunden. Die vorliegende Erfindung stellt sich daher die Aufgabe, ein Verfahren bereitzustellen, das eine einfache und schnelle Identifizierung pathologischer Veränderungen von anatomischen Arealen erlaubt.

Erfindungsgemäß wird diese Aufgabe durch ein Verfahren zur Analyse eines 3D-Datensatzes eines Untersuchungsobjekts nach Anspruch 1 sowie eine Vorrichtung zur Analyse des 3D-Datensatzes nach Anspruch 9 gelöst. Die abhängigen Ansprüche definieren weitere Ausführungsformen der vorliegenden Erfindung.

Das vorgeschlagene Verfahren zur Analyse eines 3D-Datensatzes eines Untersuchungsobjekts umfasst zunächst eine Segmentierung von anatomischen Arealen, aus denen das Untersuchungsobjekt besteht. Dieser Schritt erlaubt die Bestimmung der verschiedenen anatomischen Areale in dem 3D-Datensatz. Danach erfolgt eine Bestimmung von normalisierten anatomischen Arealen und ein Vergleich mit einem Referenzmodell. Das Referenzmodell umfasst dabei Referenzgrößen der verschiedenen anatomischen Areale. Darauf folgend wird für jedes der normalisierten anatomischen Areale ein Abweichungswert zwischen der Größe des normalisierten anatomischen Areals und der Größe des entsprechenden anatomischen Areals im Referenzmodell berechnet. Dieser Abweichungswert gibt an, wie weit die Größe des normalisierten anatomischen Areals von der Referenzgröße abweicht. In einem weiteren Schritt wird der so bestimmte Abweichungswert dem gesamten anatomischen Areal zugeordnet, so dass das anatomische Areal genau einen Abweichungswert besitzt. Danach wird jedem Bildpunkt des anatomischen Areals genau ein Intensitätswert zugeordnet, der dem Abweichungswert entspricht.

Ein Vorteil dieses Verfahrens ist, dass das gesamte anatomische Areal als ein einziges Objekt betrachtet wird. Insbesondere ist es nicht notwendig, Teilbereiche davon individuell oder separat zu analysieren. Dies reduziert die Komplexität der Analyse und führt zu einer Zeitersparnis bei der Auswertung.

Weiterhin ist für die verschiedenen anatomischen Areale leicht zu erkennen, ob und wie sie von der Referenzgröße abweichen.

Dabei ist das Verfahren zur Segmentierung des 3D-Datensatzes, und insbesondere der darin enthaltenen anatomischen Areale, bevorzugt so eingerichtet, dass die 3D Daten in Bildpunkte aufgeteilt werden. Die Bestimmung der normalisierten Größe des anatomischen Areals erfolgt dadurch, dass das Verhältnis des Volumens aller Bildpunkte des anatomischen Areals zu dem gesamten Volumen aller Bildpunkte des Untersuchungsobjektes bestimmt wird.

Der Vorteil der Normalisierung der Größe der anatomischen Areale besteht darin, dass spezifische anatomische Eigenschaften, beispielsweise verschiedene Schädelgrößen oder Geschlechtsunterschiede, kompensiert werden.

Gemäß einer möglichen Ausführungsform wird die Größe des normalisierten anatomischen Areals mit dem entsprechenden anatomischen Areal aus dem Referenzmodell verglichen. Das Referenzmodell ist dadurch gekennzeichnet, dass darin enthaltene 3D-Referenzdaten aus einer Vielzahl von segmentierten anatomischen Arealen aus einer Vielzahl von Untersuchungsobjekten bestehen. Weiterhin können die 3D-Referenzdaten eine Normalverteilung aufweisen und können beispielsweise einem linearen Gauss'schen Regressionsmodell oder einem perzentilen Modell entsprechen.

Der Vorteil des Vergleichs mit einem Referenzmodell besteht darin, dass beispielsweise pathologische Erkrankungen durch Abweichungen der Größe des normalisierten anatomischen Areals sichtbar werden.

In einer Ausführungsform des Verfahrens wird der Abweichungswert des normalisierten anatomischen Areals vom Referenzmodell bestimmt, indem die Differenz zwischen der Größe des normalisierten anatomischen Areals und der Größe des anatomischen Areals im Referenzmodell gebildet wird, und die Zuordnung des bestimmten Abweichungswertes zu jedem Bildpunkt des anatomischen Areals derart erfolgt, dass jeder Bildpunkt des anatomischen Areals genau einen Abweichungswert besitzt.

Dadurch kann eine pathologische Veränderung des anatomischen Areals festgestellt werden, denn die Größe der Abweichung stellt dabei ein Maß für die Größe der atrophischen/hypertrophischen Veränderung dar.

In einem möglichen Ausführungsbeispiel des Verfahrens wird der Abweichungswert auf Null gesetzt, falls das anatomische Areal eine atrophe CSF Gewebestruktur (CSF: cerebro-spinales Fluid) oder eine hypertrophe GM/WM Gewebestruktur (WM/GM: weiße Substanz / graue Substanz im Gehirngewebe) aufweist. Anderenfalls bleibt der Abweichungswert unverändert.

Der Vorteil dieses Verfahrensschritts besteht darin, dass selektiv auch nur die pathologischen Veränderungen betrachtet werden können. In der Regel sind dies atrophische Veränderungen von CSF Strukturen oder hypertrophische Veränderungen von GM/WM Gewebestrukturen.

In einer möglichen Ausführungsform des Verfahrens wird ein Offset-Wert zu dem Abweichungswert hinzu addiert, falls das anatomische Areal nicht segmentiert wurde oder falls in dem Referenzmodell keine Informationen über das anatomische Areal existieren.

Dadurch wird erreicht, dass anatomische Areale, die nicht direkt mit dem Referenzmodell verglichen werden können, durch Addieren eines Offsetwerts speziell gekennzeichnet werden.

In einem weiteren Schritt des Verfahrens wird einem jeden Bildpunkt des normalisierten anatomischen Areals genau ein Intensitätswert zugeordnet, der dem Abweichungswert des normalisierten anatomischen Areals vom Referenzmodell entspricht, so dass alle Bildpunkte eines anatomischen Areals die gleiche Veränderung darstellen und diese leicht erkannt werden können.

Der Vorteil dieses Schritts besteht darin, dass dem anatomischen Areal in einer bildlichen Darstellung ein Maß für die pathologische Veränderung zugeordnet werden kann und dies unmittelbar im Bild darstellbar ist.

In einer möglichen Ausführungsform des Verfahrens werden die Bildpunkte mit dem dazugehörigen Intensitätswert bildlich dargestellt, wobei der dargestellte Bereich der Bildpunkte aus einer Querschnittsebene des anatomischen Areals besteht.

Dadurch wird erreicht, dass das gesamte anatomische Areal bildlich derart dargestellt wird, dass der Intensität ein Maß für eine pathologische Veränderung des anatomischen Areals entspricht.

Die vorliegende Erfindung besteht weiterhin aus einer Vorrichtung zur Analyse eines 3D-Datensatzes, die eine Segmentierungseinheit, eine Recheneinheit, ein Eingabegerät und ein Ausgabegerät umfasst.

Dabei hat die Segmentierungseinheit die Funktion, ein gesamtes Untersuchungsobjekt in eine Vielzahl anatomischer Areale zu zerlegen.

Die Recheneinheit hat die Funktion, Größen der anatomischen Areale zu normalisierten und mit einem Referenzmodell zu vergleichen. Sie ermittelt aus diesem Vergleich einen Abweichungswert. Schließlich ordnet die Recheneinheit dem ermittelten Abweichungswert einen Intensitätswert zur bildlichen Darstellung zu.

Darüber hinaus umfasst die Vorrichtung ein Eingabegerät, das als Eingabeschnittstelle für den Benutzer dient. Das Ausgabegerät bildet die Intensitätswerte bildlich ab.

Der Benutzer des Verfahrens ist somit vorteilhaft dazu in der Lage, in sehr kurzer Zeit Informationen über atrophische oder hypertrophische Veränderungen von gesamten anatomischen Arealen zu erhalten. Insbesondere ist es nicht notwendig, mehrere Teilstrukturen eines Areals individuell zu analysieren. Dadurch ergibt sich eine Zeitersparnis bei der Bewertung von atrophischen oder hypertrophischen Veränderungen eines anatomischen Areals. Typische Beispiele für atrophische Veränderungen sind Alzheimer oder Demenz.

Darüber hinaus umfasst das vorgeschlagene Verfahren eine kostengünstige Untersuchungsmöglichkeit im Bezug auf pathologische Veränderungen von anatomischen Arealen.

Im Folgenden werden erfindungsgemäße Ausführungsformen im Detail mit Bezug zu den Figuren beschrieben.
- Fig. 1: zeigt ein Flussdiagramm zum Ablauf des erfindungsgemäßen Analyseverfahrens
- Fig. 2: zeigt eine bildliche Darstellung des Untersuchungsobjekts, welches aus einem 3D-Datensatz entnommen ist.
- Fig. 3: zeigt beispielhaft ein anatomisches Areal welches in Bildpunkte unterteilt ist.
- Fig. 4: zeigt eine schematische Darstellung eines Referenzmodells, mit dem ein normalisiertes anatomisches Areal des Untersuchungsobjekts erfindungsgemäß verglichen wird.
- Fig. 5: zeigt erfindungsgemäß die bildliche Darstellung der normalisierten anatomischen Areale und die jeweilige Abweichung vom Referenzmodell, welche durch die entsprechend eingefärbten Intensitäten dargestellt ist.
- Fig. 6: zeigt eine erfindungsgemäße Vorrichtung, mit dem das erfindungsgemäße Verfahren welches in den Figuren 1-4 dargestellt ist, technisch realisiert wird.

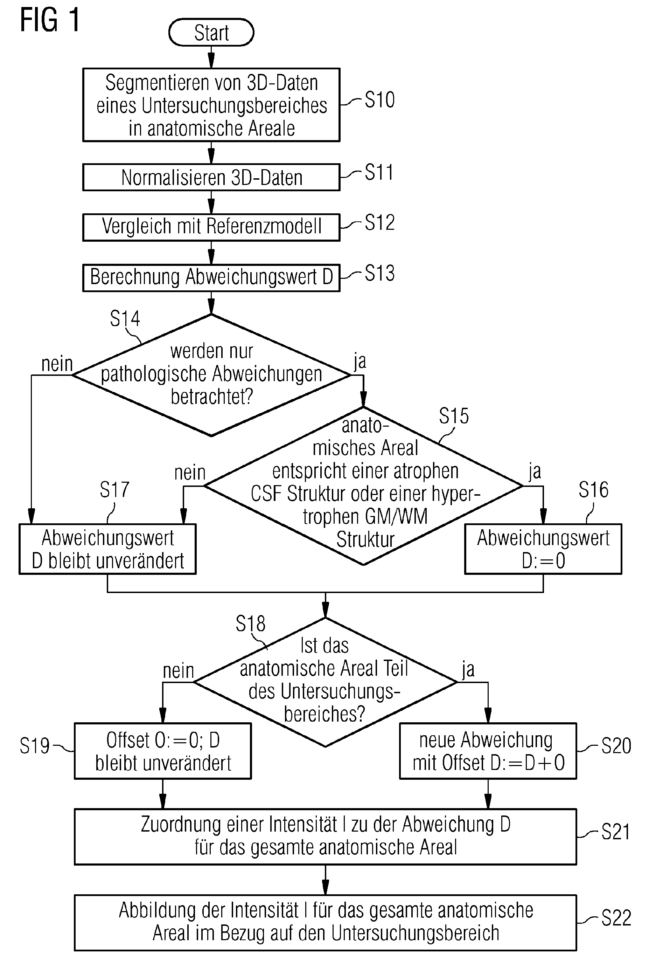

Fig. 1 stellt das Verfahren zur Analyse pathologischer Veränderungen in einem Flussdiagramm dar. Das erfindungsgemäße Verfahren ist derart aufgebaut, dass im ersten Schritt S10 eine Segmentierung eines 3D-Datensatzes mit Hilfe bekannter Segmentierungsalgorithmen erfolgt. Eine Quelle des 3D-Datensatzes kann in einem möglichen Ausführungsbeispiel eine T1 gewichtete (T1w) Magnetresonanz (MR) Gehirnvolumenaufnahme sein. In einem anderen Ausführungsbeispiel kann der 3D-Datensatz aus einer MR Aufnahme einer beliebigen Gewebestruktur eines menschlichen Körpers stammen.

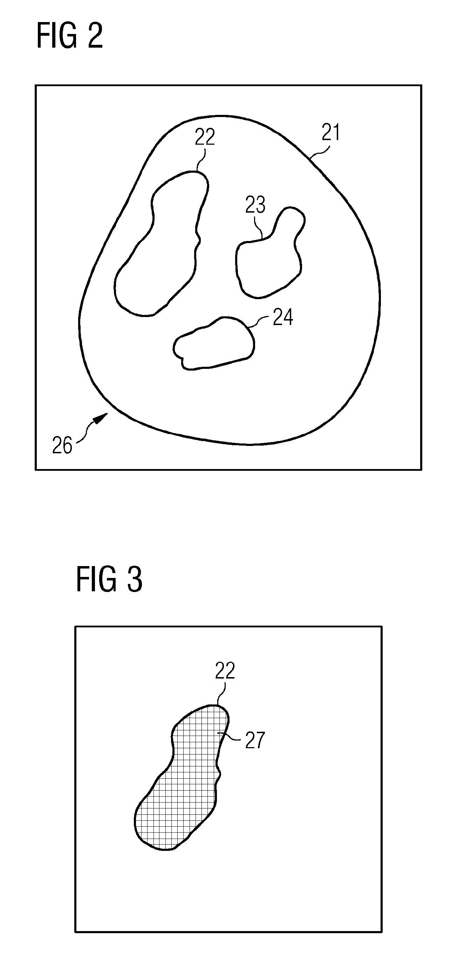

In Fig. 2 ist gezeigt, wie ein Untersuchungsobjekt 26 aus dem 3D-Datensatz in verschiedene interessante anatomische Areale (22, 23, 24) zerlegt ist.

In diesem Ausführungsbeispiel besteht das Untersuchungsobjekt 26 beispielhaft aus verschiedenen anatomischen Arealen (22, 23, 24) eines Gehirns und dem Schädelknochen 21. Die anatomischen Areale (22, 23, 24) können so entsprechend dem vorgeschlagenen Verfahren untersucht werden.

In Fig. 1 wird im nächsten Schritt S11 eine Normalisierung des gesamten Volumens eines jeden anatomischen Areals vorgenommen, indem das Verhältnis des Volumens aller Bildpunkte eines anatomischen Areals zu dem Gesamtvolumen aller Bildpunkte des Untersuchungsobjekts berechnet wird.

In Fig. 3 ist dies beispielhaft näher illustriert. Es wird das Verhältnis des Volumens aller Bildpunkte 27 des anatomischen Areals 22 zu dem Gesamtvolumen aller Bildpunkte des Untersuchungsobjekts 26 von Fig. 1 berechnet.

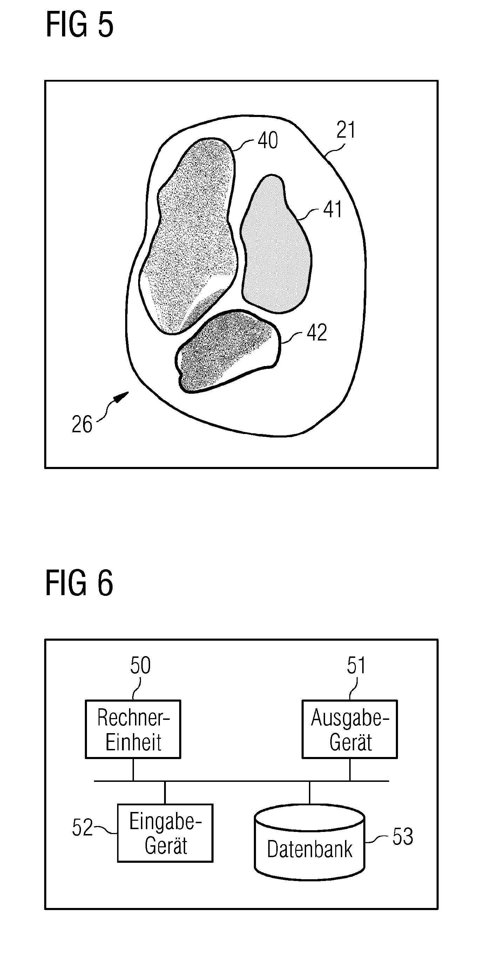

In Fig. 5 ist das Ergebnis der Normalisierung dargestellt. Es ergeben sich normalisierte anatomische Areale (40, 41, 42), die sich von den ursprünglichen anatomischen Arealen durch ihre Größe unterscheiden. Dieser Schritt ist notwendig, um die ursprünglichen anatomischen Areale zu standardisieren und mit einem Referenzmodell vergleichen zu können.

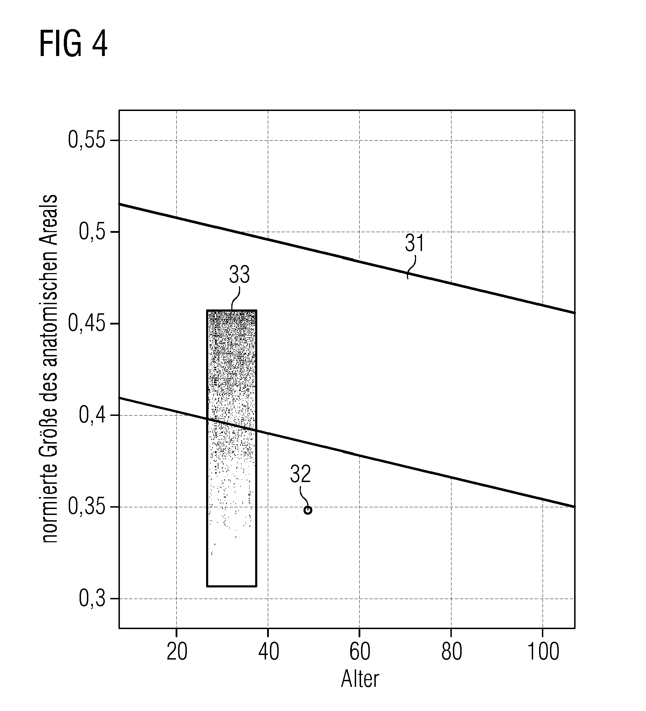

Fig. 4 zeigt ein Diagramm des Referenzmodells 31, das für den Vergleich mit einem normalisierten anatomischen Areal verwendet wird. Dieses Referenzmodell 31 umfasst 3D-Daten aus einer Vielzahl nicht-pathologischer Untersuchungsobjekte und anatomischer Areale verschiedenen Alters und entspricht beispielsweise einem Gauss'schen oder perzentilen Referenzmodell mit einer Normalverteilung. Das Diagramm stellt die Größen der nicht-pathologischen referenzierten anatomischen Areale (Y-Achse) in Abhängigkeit vom Alter der Untersuchungsobjekte (X-Achse) dar.

In Fig. 4 wird ein normalisiertes anatomisches Areal in das Diagramm entsprechend dem Alter des Untersuchungsobjekts und der Größe des normalisierten Areals eingetragen. Daraus ergibt sich ein Abweichungswert 32, der entweder innerhalb oder außerhalb des Referenzmodells liegen kann.

In dem Ausführungsbeispiel in Fig. 4 liegt der Abweichungswert 32 des normalisierten anatomischen Areals unterhalb des Referenzbereichs, d.h. das normalisierte Anatomische Areal weist im Vergleich zum Referenzmodell 31 eine geringere Größe auf. Nach dem erfindungsgemäßen Verfahren wird nun dem Abweichungswert 32 des normalisierten anatomischen Areals ein Intensitätswert zugeordnet, der aus der Intensitätsskala 33 entnommen wird. Der Wert der Intensität ist dabei ein Maß für die Abweichung von dem Referenzmodell 31.

Fig. 1 zeigt, wie in einem weiteren Schritt S12 die normalisierten 3D-Daten mit dem Referenzmodell verglichen werden. Danach wird im Schritt S13 der Abweichungswert D ermittelt, der einer Abweichung des normalisierten anatomischen Areals vom dazugehörigen anatomischen Areal im Referenzmodell entspricht. Dabei wird dem gesamten anatomischen Areal nur der eine Abweichungswert D zugeordnet.

Damit wird erreicht, dass das anatomische Areal als ganzes betrachtet wird und die separate Analyse von Teilbereichen nicht notwendig ist. Dies hat den Vorteil, dass der Fachmann auf eine schnelle und einfache Weise einen Überblick über pathologische Veränderungen des Untersuchungsbereichs erhält. Im nächsten Schritt S14 des Verfahrens wird ermittelt, ob es sich nur um pathologische Abweichungen handelt. Falls dies zutrifft, stellt das Verfahren im Schritt S15 fest, ob es sich um eine atrophe CSF Struktur (CSF: cerebro-spinales Fluid) oder eine hypertrophe GM/WM Struktur (WM/GM: weiße Substanz / graue Substanz im Gehirngewebe) handelt. Für den Fall, dass dies zutrifft, wird der Abweichungswert D auf Null gesetzt. Dies entspricht dem Schritt S16. Handelt es sich in dem anderen Fall nicht um eine atrophe CSF Struktur oder eine hypertrophe GM/WM Struktur, bleibt der Abweichungswert D im Schritt S17 unverändert.

Falls keine pathologischen Abweichungen betrachtet werden, bleibt der Abweichungswert D ebenfalls unverändert.

Im nächsten Schritt S18 ermittelt das Verfahren, ob das anatomische Areal Teil des Untersuchungsbereichs ist. Falls dieser Fall S20 eintritt, wird zu dem Abweichungswert D ein Offset O hinzuaddiert. Für den Fall, dass das anatomische Areal kein Teil des Untersuchungsbereichs ist, bleibt die Abweichung D unverändert. Dies entspricht dem Schritt S19.

Fig. 5 zeigt beispielhaft ein anatomisches Areal welches nicht Teil des Untersuchungsbereichs ist. In diesem Ausführungsbeispiel ist das der Schädelknochen 21, in dem sich die normalisierten anatomischen Areale (40, 41, 42) befinden. Hier sind die normalisierten anatomischen Areale (40, 41, 42) Teil des Untersuchungsbereichs, der Schädelknochen 21 ist jedoch kein Teil des Untersuchungsbereichs.

Im nächsten Schritt S21 in Fig. 1 wird zur bildlichen Darstellung des normalisierten anatomischen Areals dem Abweichungswert D ein Intensitätswert I zugeordnet, der der Größe der Abweichung entspricht.

Im darauffolgenden Schritt S22 bildet das Verfahren dann die Intensität I des anatomischen Areals zusammen mit der Intensität des Untersuchungsobjekts ab, in dem sich das normalisierte anatomische Areal befindet.

In Fig. 5 sind die normalisierten anatomischen Areale (40, 41, 42) in dem Untersuchungsobjekt 26 bildlich dargestellt, wobei die zugeordneten Intensitätswerte eines jeden Areals der Abweichung vom Referenzmodell entsprechen. In diesem Ausführungsbeispiel entspricht einem hellen Wert eine große Abweichung vom Referenzmodell, ein dunkler Wert entspricht einer geringen oder keiner Abweichung.

Fig. 6 stellt eine Vorrichtung zur technischen Umsetzung des vorgeschlagenen Verfahrens dar.

Dabei umfassen die Aufgaben der Rechnereinheit 50 für die Umsetzung der oben Verfahrensschritte. Die Rechnereinheit 50 ist mit einer Datenbank 53 verbunden, die die Daten des Referenzmodells umfasst, welches zum Vergleichen mit den Untersuchungsobjekten verwendet wird.

Zusätzlich dazu umfasst die Vorrichtung aus Fig. 6 ein Eingabegerät 52, welches als Eingabeschnittstelle des Benutzers dient und ein Ausgabegerät 51, welches zur bildlichen Darstellung der Intensitätswerte der normalisierten anatomischen Areale benutzt wird.

Das vorgeschlagene Verfahren stellt dem Fachmann eine Methode zur Verfügung, auf einfache Weise einen schnellen Überblick über atrophische oder hypertrophische Veränderungen von Gewebestrukturen eines gesamten anatomischen Areals zu erhalten. Dabei ist es nicht mehr notwendig, Teilbereiche des Areals individuell zu analysieren, welches eine Zeitersparnis zu den bereits existierenden Verfahren darstellt.

Da das Verfahren auf die Darstellung normalisierter Gewebestrukturen im Bezug auf ihre Größe aufbaut, werden Volumeneffekte oder räumliche Schiefstellungen korrigiert, was ebenfalls zur Einfachheit des Verfahrens beiträgt.
Da es sich bei dem Verfahren um eine Analyse der quantitativen Veränderungen anatomischer Areale im Vergleich mit einem fixen Referenzmodell handelt, kann der Fachmann auf einfache Weise zeitliche Veränderungen der pathologischen Strukturen des Untersuchungsobjekts ermitteln.

Zudem baut das Verfahren auf bereits existierende 3D-Datensätze auf, was die Datenanalyse in der Umsetzung und im Betrieb kostengünstig macht.

## Patentansprüche

1. Verfahren zur Analyse eines 3D-Datensatzes eines Untersuchungsobjekts (26), mit folgenden Schritten:
- Segmentieren des 3D-Datensatzes des Untersuchungsobjekts (26) zur Bestimmung verschiedener anatomischer Areale (22, 23, 24) in dem 3D-Datensatz,
- Bestimmen von normalisierten anatomischen Arealen (40, 41, 42) durch Normalisierung der Größen der verschiedenen anatomischen Areale (22, 23, 24),
- Vergleichen der Größen der verschiedenen normalisierten anatomischen Areale (40, 41, 42) mit einem Referenzmodell (31), welches Referenzgrößen der verschiedenen anatomischen Areale aufweist, und
für jedes der normalisierten anatomischen Areale (40, 41, 42),
- Bestimmen eines Abweichungswertes (32), der angibt, wie die Größe des jeweiligen normalisierten anatomischen Areals (40, 41, 42) von der zugehörigen Referenzgröße abweicht,
- Zuordnen, zu allen Bildpunkten (27) eines jeweiligen anatomischen Areals, des bestimmten Abweichungswertes (32), so dass alle Bildpunkte (27) eines anatomischen Areals den gleichen Abweichungswert (32) haben.
- Zuordnen, zu allen Bildpunkten (27) eines jeweiligen anatomischen Areals, eines Intensitätswertes zur bildlichen Darstellung, der dem Abweichungswert (32) entspricht.

2. Verfahren nach Anspruch 1, **dadurch gekennzeichnet,**
**dass** alle anatomischen Areale (22, 23, 24), die in dem 3D-Datensatz des Untersuchungsobjektsenthalten enthalten sind, in eine Vielzahl von Bildpunkten (27) zerlegt werden, und
**dass** das Normalisieren eines anatomischen Areals (22, 23, 24) dadurch erfolgt, dass das Verhältnis des Volumens aller Bildpunkte (27) des anatomischen Areals (22, 23, 24) zu dem gesamten Volumen aller Bildpunkte des Untersuchungsobjektes (26) bestimmt wird.

3. Verfahren nach einem der vorhergehenden Ansprüche, **dadurch gekennzeichnet,**
**dass** die Größe des normalisierten anatomischen Areals (40, 41, 42) mit dem entsprechenden anatomischen Areal aus einem Referenzmodell (31) verglichen wird, welches eine statistische Normalverteilung aufweist und 3D-Referenzdaten aus einer Vielzahl von segmentierten anatomischen Arealen aus einer Vielzahl von Untersuchungsobjekten umfasst.

4. Verfahren nach einem der vorhergehenden Ansprüche, **dadurch gekennzeichnet,**
**dass** der Abweichungswert (32) des normalisierten anatomischen Areals (40, 41, 42) vom Referenzmodell (31) dadurch bestimmt wird, dass die Differenz zwischen der Größe des normalisierten anatomischen Areals (40, 41, 42) und der Größe des anatomischen Areals im Referenzmodell berechnet wird, und
**dass** die Zuordnung des bestimmten Abweichungswertes (32) zu jedem Bildpunkt (27) des anatomischen Areals derart erfolgt, dass jeder Bildpunkt (27) des anatomischen Areals genau einen Abweichungswert besitzt.

5. Verfahren nach einem der vorhergehenden Ansprüche, **dadurch gekennzeichnet,**
**dass** der Abweichungswert (32) auf Null gesetzt wird, wenn das anatomische Areal (22, 23, 24) eine atrophe cerebrospinale Flüssigkeits-Gewebestruktur oder eine hypertrophe graue Masse/weiße Masse Gewebestruktur umfasst, und
**dass** der Abweichungswert (32) unverändert bleibt, wenn das anatomische Areal (22, 23, 24) weder eine atrophe cerebrospinale Flüssigkeits-Gewebestruktur noch eine hypertrophe GM/WM Gewebestruktur umfasst.

6. Verfahren nach einem der vorhergehenden Ansprüche, **dadurch gekennzeichnet, dass** das Verfahren zusätzlich umfasst:
ein Addieren eines Offset-Wertes zu dem Abweichungswert (32), falls das anatomische Areal (22, 23, 24) nicht segmentiert wurde, und
das Addieren eines Offset-Wertes zu dem Abweichungswert (32), falls in dem Referenzmodell (31) keine Informationen über das anatomische Areal existieren.

7. Verfahren nach einem der vorhergehenden Ansprüche, **dadurch gekennzeichnet,**
**dass** einem jeden Bildpunkt (27) des normalisierten anatomischen Areals (40, 41, 42) genau ein Intensitätswert zugeordnet wird, der dem Abweichungswert (32) des normalisierten anatomischen Areals (40, 41, 42) vom Referenzmodell (31) entspricht.

8. Verfahren nach einem der vorhergehenden Ansprüche, **dadurch gekennzeichnet,**
**dass** ein Teil der Bildpunkte (27) mit dem Intensitätswert bildlich dargestellt wird, wobei der Teil der Bildpunkte aus einer Querschnittsebene des anatomischen Areals besteht.

9. Vorrichtung zur Analyse eines 3D-Datensatzes eines Untersuchungsobjekts, welche aufweist:
- eine Recheneinheit (50), die ausgebildet ist, 3D Daten eines Untersuchungsobjekts (26) zu segmentieren, und normalisierte anatomische Areale zu bestimmen durch Normalisierung der Größe der verschiedenen anatomischen Areale (22, 23, 24), und für jedes der normalisierten anatomischen Areale,
die Größen der normalisierten anatomischen Areale (40, 41, 42) mit einem Referenzmodell (31) zu vergleichen, und einen Abweichungswert (32) zwischen der Größe der normalisierten anatomischen Areale (40, 41, 42) und der zugehörigen Referenzgröße zu bestimmen, und
den Abweichungswert (32) allen Bildpunkten (27) eines jeweiligen normalisierten anatomischen Areals (40, 41, 42) zuzuordnen, und
allen Bildpunkten (27) einen Intensitätswert zuzuordnen, der dem Abweichungswert (32) entspricht.
- eine Datenbank (53), die ausgebildet ist, die 3D Daten zu speichern
- ein Eingabegerät (52), das als Benutzer-Eingabeschnittstelle ausgebildet ist
- ein Ausgabegerät (51), das ausgebildet ist, die Intensitätswerte bildlich darzustellen.

10. Vorrichtung nach Anspruch 9, **dadurch gekennzeichnet,**
**dass** die Vorrichtung zur Durchführung des Verfahrens nach einem der Ansprüche 1-8 ausgestaltet ist.
